# EUROPÄISCHE PATENTSCHRIFT

(11) **EP 2 392 086 B1**
(45) Veröffentlichungstag und Bekanntmachung des Hinweises auf die Patenterteilung: **15.03.2017**
(21) Anmeldenummer: 10700322.0
(22) Anmeldetag: 12.01.2010
(51) Int. Cl.: H04B 17/27, H04B 17/373, H04H 20/67, H04H 60/11, H04H 60/50, H04H 60/51

(54) **VERFAHREN UND VORRICHTUNG ZUR EMPFANGSVERBESSERUNG IN EINEM GLEICHWELLENNETZ**
METHOD AND APPARATUS FOR IMPROVING RECEPTION IN A COMMON WAVE NETWORK
PROCÉDÉ ET APPAREIL POUR AMÉLIORER LA RÉCEPTION DANS UN RÉSEAU EN ONDE COMMUNE

(30) Priorität: 29.01.2009 DE 102009000465
(43) Veröffentlichungstag der Anmeldung: 07.12.2011
(73) Patentinhaber: Robert Bosch GmbH, 70442 Stuttgart (DE)
(72) Erfinder: BERTRAM, Gerold, 31693 Hespe (DE); SCHOLZ, Maik, 31185 Feldbergen (DE)
(86) Internationale Anmeldenummer: PCT/EP2010/050242
(87) Internationale Veröffentlichungsnummer: WO 2010/086209

(56) Entgegenhaltungen:
- EP-A2- 1 049 277
- WO-A2-2009/135186
- DE-A1- 19 710 040
- US-A1- 2006 068 699

## Beschreibung

### Stand der Technik

In einem Gleichwellennetz senden mehrere Sender identische Nachrichten mittels synchronisierter Sendefrequenzen aus. Ein Empfänger in einem solchen Netz kann durch Überlagerung der Sendersignale mehrerer Sender die ausgesandten Nachrichten am Empfangsort auch unter schlechten Empfangsbedingungen noch empfangen. Die Technik des Gleichwellennetzes wird beispielsweise beim digitalen Rundfunk (Digital Audio Broadcast, DAB) verwendet. Hier werden mehrere akustische Sendekanäle in einem digitalen Datenstrom ("Ensemble") kombiniert und dieser als Nachricht von den Sendern ausgesandt. Eine eindeutige Identifikation eines Senders kann in der Transmitter Identification Information (TII), die Bestandteil des DAB-Synchronisierungskanals ist, übermittelt werden. Weitere Informationen, die Sender des Netzes betreffen, werden mittels des Fast Information Channel (FIC) übertragen. In diesem werden beispielsweise mittels einer Signalisierung der Fast Information Group (FIG) des Typs 0/22 die geographischen Längen- und Breitengrade der Standorte der einzelnen DAB-Sender übermittelt. Auf der Basis der Identifikationen der empfangenen Sender und deren Standorte kann ein Empfänger seinen eigenen Empfangsort grob abschätzen, indem er ein Gebiet bestimmt, das von den empfangenen Sendern sendetechnisch abgedeckt wird. Eine solche empfängerseitige Empfangsort-Abschätzung kann beispielsweise hilfreich sein, um aktuelle Informationen mit lokaler Relevanz (etwa Verkehrsdurchsagen) in geeigneter Weise an einen Benutzer des Empfängers ausgeben.

DE 197 10 040 A1 beschreibt eine Technik zur Bestimmung von richtungsselektiven Kanalimpulsantworten mittels ungerichteter Empfangselemente für ein Gleichwellennetz. Reflektoren, die einen Teil eines von einem Sender ausgesandten Signals zu einem Empfänger reflektieren und dort eine Überlagerung des reflektierten mit einem unreflektierten Teil des Signals hervorrufen, können bestimmt werden, indem empfängerseitig Einfallswinkel, Intensität und Laufzeit von Partialwellen des Wellenfeldes des Senders erfasst werden.

Es ist Aufgabe der Erfindung, eine Technik bereitzustellen, mittels derer ein Empfang in einem Gleichwellennetz weiter verbessert werden kann.

### Offenbarung der Erfindung

Die Aufgabe wird gelöst durch ein Verfahren mit den Merkmalen von Anspruch 1 und eine Vorrichtung mit den Merkmalen von Anspruch 5. Unteransprüche geben jeweils vorteilhafte Variationen an.

In einer Ausführung umfasst ein Verfahren zum vorausschauenden Anpassen einer Empfangsstrategie in einem Gleichwellennetz, umfassend folgende Schritte: Bestimmen einer voraussichtlichen Trajektorie eines Empfängers des Gleichwellennetzes; Auswählen wenigstens eines Empfangsorts auf der Trajektorie; Bestimmen von Standorten und Sendeparametern für wenigstens einen Sender des Gleichwellennetzes; Bereitstellen topographischer Informationen eines den Empfangsort und den Standort wenigstens eines der Sender umfassenden Gebiets; Bestimmen der Empfangswahrscheinlichkeit am Empfangsort auf der Basis topographisch bedingter Signalausbreitungen zwischen den Senderstandorten und dem Empfangsort; Ansteuern des Empfängers in Abhängigkeit der bestimmten Empfangswahrscheinlichkeit.

Die Empfangswahrscheinlichkeit gibt an, mit welcher Wahrscheinlichkeit mit einem decodierbaren Empfang des Signals des Gleichwellennetzes an dem vorbestimmten Empfangsort zu rechnen ist. Ob ein Empfang an diesem Empfangsort im Einzelfall tatsächlich möglich ist, hängt hauptsächlich von nicht modellierten Einflüssen ab, beispielsweise Messfehlern, Rauschen, atmosphärischen Einflüssen etc. Vorzugsweise wird der Standort, die Sendeleistung und die richtungsabhängige Ausbreitungscharakteristik jedes Senders des Gleichwellennetzes in einem Informationsteil des Signals des Gleichwellennetzes übermittelt, wobei die Ausbreitungscharakteristik angibt, in welche Richtung ein Sender sein Signal wie weit abstrahlt. Informationen über topographische Gegebenheiten eines Empfangsgebiets, wie beispielsweise ein Höhenprofil, Vegetationsinformationen oder Angaben über eine Bebauung werden verwendet, um die Empfangswahrscheinlichkeit für den Empfangsort bezüglich dieses Senders zu bestimmen, indem eine Ausbreitung der Signale jedes Senders zum vorbestimmten Empfangsort modelliert wird.

Das Verfahren kann bezüglich mehrerer empfangbarer Sender diskret oder kombiniert durchgeführt werden. Die bestimmte Empfangswahrscheinlichkeit kann beispielsweise dazu verwendet werden, beim Empfänger Umschaltstrategien zwischen den Sendern zu beeinflussen oder eine Ausgabe von senderbezogenen Serviceinformationen an einen Benutzer zu beeinflussen.

In einer Variante der Erfindung werden die topographischen Informationen aus einer Datenbank akquiriert, die zur Navigation eines Fahrzeugs dient, in dem der Empfänger für das Gleichwellennetz angebracht ist. Die Datenbank kann Teil eines beispielsweise satellitengestützten Navigationssystems sein. Die Empfangswahrscheinlichkeit kann für eine Anzahl Punkte entlang einer im Navigationssystem hinterlegten Route oder einer voraussichtlichen Trajektorie des Empfängers bestimmt werden.

Weitere Merkmale und Vorzüge der Erfindung werden im Folgenden mit Bezug auf die Figuren beschrieben, wobei
- Fig. 1: eine Vorrichtung und ein System zum Bestimmen einer Empfangswahrscheinlichkeit;
- Fig. 2: eine beispielhafte Trajektorie des Systems von Fig. 1 in einer topographischen Darstellung eines Gleichwellennetzes;
- Fig. 3: eine beispielhafte Darstellung einer Sendecharakteristik eines Senders wie denen aus Fig. 2; und
- Fig. 4: ein beispielhaftes Datenformat zur Signalisierung der Sendecharakteristik des Senders aus Fig. 3 zeigt.

Gleiche bzw. einander entsprechende Elemente tragen gleiche Bezugszeichen in allen Figuren.

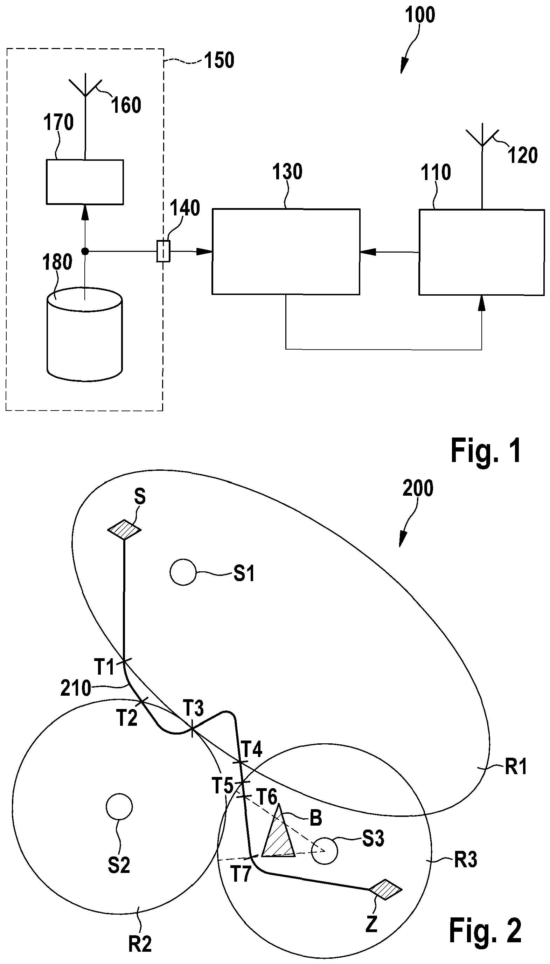

Fig. 1 zeigt ein System 100 zur Bestimmung einer Empfangswahrscheinlichkeit an einem vorbestimmten Empfangsort in einem Gleichwellennetz. Ein Empfänger 110 ist mit einer Empfangsantenne 120 und einer Verarbeitungseinrichtung 130 verbunden. Die Empfangseinrichtung 130 ist mit der Verarbeitungseinrichtung 110 sowie mittels einer Schnittstelle 140 mit einem Navigationssystem 150 verbunden, welches eine Satellitenantenne 160, einen Navigationsrechner 170 und eine Datenbank 180 umfasst.

Mittels der Empfangsantenne 120 empfängt der Empfänger 110 Signale eines oder mehrerer Sender eines Gleichwellennetzes und stellt die empfangenen Signale der Verarbeitungseinrichtung 130 bereit. Diese Signale umfassen Informationen bezüglich der Standorte und der Sendecharakteristiken der einzelnen Sender. Die Verarbeitungseinrichtung 130 bestimmt bzw. extrahiert diese Informationen aus dem Signal. Mittels der Schnittstelle 140 akquiriert die Verarbeitungseinrichtung 130 von dem Navigationssystem 150 topographische Informationen eines Gebiets, das die Standorte aller empfangenen Sender und den Ort umfasst, für den die Bestimmung der Empfangswahrscheinlichkeit durchgeführt werden soll. Dieser Ort kann beispielsweise eine gegenwärtiger Empfangsort des Systems 100 sein. Alternativ kann der Empfangsort beispielsweise auf einer geplanten Route oder zu erwartenden Trajektorie des Systems 100 liegen. Den Empfangsort kann beispielsweise die Verarbeitungseinrichtung 130 mittels der Schnittstelle 140 vom Navigationssystem 150 akquirieren.

Auf der Basis bestimmter Empfangswahrscheinlichkeiten steuert die Verarbeitungseinrichtung 130 den Empfänger 110. Diese Steuerung kann in Abhängigkeit eines gegenwärtigen Empfangsorts erfolgen, der beispielsweise durch die Verarbeitungseinrichtung 130 mittels der Schnittstelle 140 vom Navigationssystem 150 akquiriert werden kann.

In einer Variante bestimmt das Navigationssystem 150 einen gegenwärtigen Empfangsort (und damit den Empfangsort des Systems 100) auf der Basis mittels der Satellitenantenne 160 von Satelliten empfangener Signale. In alternativen Ausführungsformen ist auch eine beliebige andere Vorgehensweise zur Bestimmung eines Empfangsorts durch das Navigationssystem 150 möglich.

In einer alternativen Ausführungsform entfällt das Navigationssystem 150 mit Ausnahme der Datenbank 180. Die Datenbank 180 ist in diesem Fall unmittelbar oder mittels der Schnittstelle 140 mit der Verarbeitungseinrichtung 130 verbunden.

Fig. 2 zeigt eine schematische Darstellung 200 einer Trajektorie 210 eines Systems 100 nach Fig. 1 in einer topographischen Ansicht eines Abschnitts eines Gleichwellennetzes von oben. Das System 100 bewegt sich entlang der Trajektorie 210 von einem Startpunkt S über die Kontrollpunkte T1 ... T7 zu einem Zielpunkt Z. Drei Sender S1 bis S3 sind Bestandteile des Gleichwellennetzes. Der Sender S1 weist eine elliptische Sendecharakteristik auf; ein von ihm abgedecktes Sendegebiet R1 ist elliptisch und umfasst den Startpunkt S. Die Sender S2 und S3 weisen jeweils kreisförmige Sendecharakteristiken auf. Ein kreisförmiges Sendegebiet R2 des Senders S2 umfasst die Kontrollpunkte T2 und T3. Ein ebenfalls kreisförmiges Sendegebiet R3 des Senders S3 umfasst den Zielpunkt Z und einen Berg B.

Im Folgenden wird eine kurze Beschreibung der Empfangsbedingungen entlang der Trajektorie 210 von S nach Z gegeben. Zwischen S und T1 kann lediglich der Sender S1 empfangen werden, während zwischen T1 und T2 gar kein Empfang möglich ist. Zwischen T2 und T3 kann allein der Sender S2 empfangen werden; zwischen T3 und T4 allein der Sender S1. Die Trajektorie 210 liegt zwischen T4 und T5 in keinem der Sendegebiete R1 bis R3. Da hier jedoch der Abstand zu jedem der drei Sendegebiete R1 bis R3 gering ist, kann durch einen Signalüberlagerungseffekt der drei Sender S1, S2 und S3 trotzdem ein Empfang der Signale des Gleichwellennetzes möglich sein. Zwischen T5 und T6 kann allein der Sender S3 empfangen werden. Zwischen T6 und T7 liegt die Trajektorie 210 zwar im Sendebereich R3, ein Empfang von S3 ist jedoch trotzdem nicht möglich, da das Signal von S3 durch den Berg B verschattet wird. Die Sendegebiete der Sender S1 und S2 sind zu weit entfernt, um einen Empfang auf diesem Abschnitt der Trajektorie 210 zu ermöglichen. Zwischen T7 und dem Zielpunkt Z kann wieder der Sender S3 empfangen werden.

Durch vorherige Bestimmung von Empfangswahrscheinlichkeiten an wenigstens einem ausgewählten Punkt der Trajektorie 210 kann das System 100 seine Empfangs- bzw. Umschaltstrategie vorausschauend an die zu erwartenden Empfangsbedingungen anpassen. So kann beispielsweise im Abschnitt zwischen T6 und T7 auf einen FM-Sender oder ein alternatives DAB-Ensemble umgeschaltet werden. Im Abschnitt zwischen S und T1 gesammelte lokale Informationen des Senders S1, die das Sendegebiet R1 betreffen, können für eine spätere Verwendung im Abschnitt zwischen T3 und T4 gespeichert werden. Weitere, auf eine bestimmte Empfangswahrscheinlichkeit basierende Maßnahmen zur Empfangs- bzw. Informationsverarbeitungsverbesserung sind ebenfalls möglich.

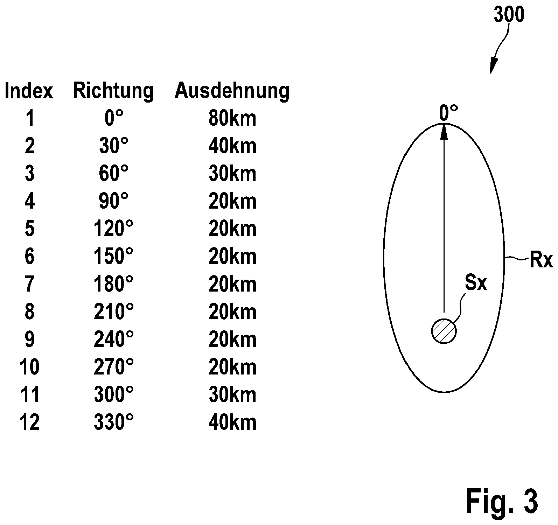

Fig. 3 zeigt eine Sendecharakteristik 300 eines Senders Sx wie den Sendern S1 bis S3 in Fig. 2 sowie eine Tabelle, welche ein richtungsabhängiges Sendegebiet Rx des Senders Sx angibt. Der Sender Sx weist eine Sendeleistung von beispielsweise 10 kW auf. Aufgrund einer richtungsabhängigen Abstrahlcharakteristik ergibt sich dessen Sendegebiet Rx, das als ein Gebiet definiert ist, in dem minimale Empfangsstärken nach EN 50248 erreicht werden. Das Sendegebiet Rx kann beispielsweise in Form der Tabelle beschrieben werden. Dabei werden Polarkoordinaten verwendet, die als Ursprung den Standort des Senders Sx und als Bezugsrichtung die eingezeichnete Richtung von 0° (beispielsweise geographisch nordweisend) verwenden. Die jeweilige Ausdehnung des Sendegebiets Rx in angegebenen Richtungen erfolgt in einer Entfernungsangabe.

Die Tabelleneinträge können in beliebiger Weise gewählt sein, beispielsweise kann eine feste Anzahl von n fest vorgegebenen Richtungen umfasst sein oder eine Anzahl Paare von Richtungen und Entfernungen derart angegeben werden, dass das Sendegebiet Rx mit möglichst wenigen solchen Paaren beschrieben ist. Zwischen den einzelnen Angaben können Reichweiten interpoliert werden. Im Fall einer kreisförmigen Sendecharakteristik kann somit eine einzige Reichweitenangabe bereits ausreichen, um das Sendegebiet Rx zu beschreiben. In der Tabelle ist n = 12, d.h. es sind 12 Wertepaare angegeben.

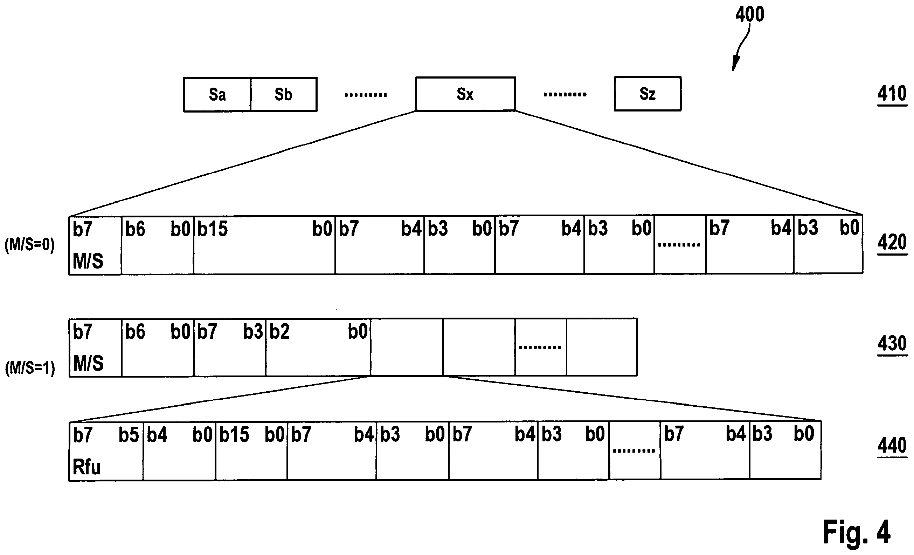

Fig. 4 zeigt eine schematische Darstellung 400 einer beispielhaften Codierung der für das Verfahren benötigten Informationen von Sendern des Gleichwellennetzes von Fig. 2 in einem Vorschlag für eine FIG-Signalisierung analog der im Standard EN 300401 definierten Signalisierung 0/22.

Die Zeile 410 zeigt eine sequenzielle Abfolge einer Übertragung senderbezogener Informationen für Sender Sa, Sb, ..., Sx, ... Sz entsprechend einer Typ-0 Signalisierung der Erweiterung 22 (FIG 0/22). In Zeile 420 ist eine Expansion der Informationen aus Zeile 410 über den Sender Sx aus Fig. 3 dargestellt, wobei das "Main Identifier"-Feld auf 0 gesetzt ist. Eine alternative Expansion desselben Datenfeldes ist in Zeile 430 dargestellt, wobei das "Main Identifier"-Feld auf 1 gesetzt ist. Zeile 440 zeigt eine weitere Expansion eines der Datenfelder aus Zeile 430.

Die Felder "M/S", "Mainld" und "num Subld" sind im Standard EN 300401 FIG0/22 definiert. Das Feld "Rfu" ("Reserved for Future Use") wird derzeit nicht verwendet und sollte komplett auf 0 gesetzt werden. Das Feld "power" zeigt die ausgestrahlte Sendeleistung eines Senders in Einheiten von 10 W an. Das Feld "direct" gibt eine Richtung in Einheiten von 30° zwischen 0° und 330° an. Das Feld "range" gibt eine Ausdehnung des Sendegebiets Rx in Einheiten von 10 km, beginnend bei 10 km, an (d.h., range = 0 entspricht einer Reichweite von 10 km). Paare von "direct"- und "power"-Feldern werden verwendet, um ein richtungsabhängiges Sendegebiet eines Senders zu beschreiben

In Zeile 420 ist das "Main Identifier" Feld ("M/S") auf 0 gesetzt. Im Anschluss an das "Main Identifier" Feld werden die Felder "Mainld", "power" übertragen. Hierauf folgt eine vorbestimmte Anzahl von n Wertepaaren, von denen jedes eine Angabe einer Richtung ("direct") und eine Angabe einer Ausdehnung ("range") des dem Sender zugeordneten Sendegebiets Rx umfasst (vgl. Tabelle in Fig. 3).

In Zeile 430 ist das "Main Identifier" Feld ("M/S") auf 1 gesetzt. Nach den auf das "Main Identifier" Feld folgenden Feldern "Mainld" und "Rfu" ist im Feld "num Subld" die Anzahl der folgenden Senderinformationen angegeben (p). Anschließend werden nacheinander Felder mit den einzelnen Senderinformationen übermittelt. Das erste Feld ist exemplarisch in Zeile 440 expandiert dargestellt.

Die in Zeile 440 dargestellten Felder umfassen, ähnlich wie in Zeile 420 ab dem dritten Feld, eine Angabe einer Sendeleistung des Senders und eine vorbestimmte Anzahl von n Wertepaaren von Richtungen ("direct") und Ausdehnungen ("range") des jeweils zugeordneten Sendegebiets Rx.

Mittels der vorgestellten Technik lässt sich eine Empfangswahrscheinlichkeit an einem vorbestimmten Empfangsort in einem Gleichwellennetz auf vorteilhafte Weise bestimmen und zum Zweck der Verbesserung von Empfangsstrategien oder zur verbesserten Ausgabe von empfangenen Informationen an einen Benutzer verwenden.

## Patentansprüche

1. Verfahren zum vorausschauenden Anpassen einer Empfangsstrategie in einem Gleichwellennetz, umfassend folgende Schritte:
- Bestimmen einer voraussichtlichen Trajektorie (210) eines Empfängers (110) des Gleichwellennetzes;
- Auswählen wenigstens eines Empfangsorts auf der Trajektorie (210);
- Bestimmen von Standorten und Sendeparametern für wenigstens einen Sender (S1, S2, S3) des Gleichwellennetzes;
- Bereitstellen topographischer Informationen eines den Empfangsort und den Standort wenigstens eines der Sender (S1, S2, S3) umfassenden Gebiets;
- Bestimmen der Empfangswahrscheinlichkeit am Empfangsort auf der Basis topographisch bedingter Signalausbreitungen zwischen den Senderstandorten und dem Empfangsort;
- Ansteuern des Empfängers (110) in Abhängigkeit der bestimmten Empfangswahrscheinlichkeit.

2. Verfahren nach Anspruch 1, wobei die Sendeparameter wenigstens eines von einer Sendeleistung und einer richtungsabhängigen Ausbreitungscharakteristik umfassen.

3. Verfahren nach Anspruch 1 oder 2, wobei das Bestimmen der beabsichtigten Trajektorie (210) den Schritt des Bestimmens eines Bewegungszustandes des Empfängers (110) umfasst.

4. Verfahren nach einem der vorangehenden Ansprüche, ferner umfassend den Schritt des Bestimmens der Sendeparameter und/oder des Standorts wenigstens eines Senders (S1, S2, S3) auf der Basis eines mittels des Gleichwellennetzes übermittelten Signals.

5. Vorrichtung zur vorausschauenden Anpassung einer Empfangsstrategie in einem Gleichwellennetz, umfassend:
- eine Navigationseinrichtung (170) zur Bestimmung einer voraussichtlichen Trajektorie (210) des Empfängers (110) und zur Bestimmung eines Empfangsortes ; - eine Einrichtung zur Auswahl wenigstens eines Empfangsortes auf der Trajektorie (210);
- eine erste Bestimmungseinrichtung (110, 120, 130) zur Bestimmung von Standorten und Sendeparametern für wenigstens einen Sender (S1, S2, S3) des Gleichwellennetzes;
- eine Bereitstellungseinrichtung (150) für topographische Informationen eines den Empfangsort und den Standort wenigstens eines der Sender (S1, S2, S3) umfassenden Gebiets; und
- eine zweite Bestimmungseinrichtung (130) zur Bestimmung der Empfangswahrscheinlichkeit am Empfangsort auf der Basis topographisch bedingter Signalausbreitungen zwischen den Senderstandorten und dem Empfangsort
wobei
- der Empfänger (110) dazu eingerichtet ist, in Abhängigkeit der bestimmten Empfangswahrscheinlichkeit angesteuert zu werden.

6. Vorrichtung nach Anspruch 5, wobei die erste Bestimmungseinrichtung (110, 120, 130) einen Empfänger (110) des Gleichwellennetzes umfasst.

7. Vorrichtung nach einem der Ansprüche 5 oder 6, wobei die Bereitstellungseinrichtung (150) eine Schnittstelle (140) zu einem eine topographische Datenbank (180) umfassenden Navigationssystem (150) umfasst.

8. System (100) zur Bestimmung einer Empfangswahrscheinlichkeit an einem vorbestimmten Empfangsort in einem Gleichwellennetz, umfassend eine Vorrichtung nach einem der Ansprüche 5-7 und ein eine topographische Datenbank (180) umfassendes Navigationssystem (150).

## Claims

1. Method for predictively adapting a reception strategy in a simultaneous broadcasting network, comprising the following steps:
- determining a probable trajectory (210) of a receiver (110) of the simultaneous broadcasting network;
- selecting at least one reception location on the trajectory (210);
- determining positions and transmission parameters for at least one transmitter (S1, S2, S3) of the simultaneous broadcasting network;
- providing topographical information for an area comprising the reception location and the position of at least one of the transmitters (S1, S2, S3) ;
- determining the probability of reception at the reception location on the basis of topographically dependent signal propagations between the transmitter positions and the reception location;
- actuating the receiver (110) on the basis of the determined probability of reception.

2. Method according to Claim 1, wherein the transmission parameters comprise at least one from a transmission power and a direction-dependent propagation characteristic.

3. Method according to Claim 1 or 2, wherein the determination of the intended trajectory (210) comprises the step of determining a motion state of the receiver (110).

4. Method according to one of the preceding claims, further comprising the step of determining the transmission parameters and/or the position of at least one transmitter (S1, S2, S3) on the basis of a signal transmitted by means of the simultaneous broadcasting network.

5. Apparatus for predictively adapting a reception strategy in a simultaneous broadcasting network, comprising:
- a navigation device (170) for determining a probable trajectory (210) of the receiver (110) and for determining a reception location;
- a device for selecting at least one reception location on the trajectory (210);
- a first determination device (110, 120, 130) for determining positions and transmission parameters for at least one transmitter (S1, S2, S3) of the simultaneous broadcasting network;
- a provision device (150) for topographical information for an area comprising the reception location and the position of at least one of the transmitters (S1, S2, S3); and
- a second determination device (130) for determining the probability of reception at the reception location on the basis of topographically dependent signal propagations between the transmitter positions and the reception location,
wherein
- the receiver (110) is set up to take the determined probability of reception as a basis for being actuated.

6. Apparatus according to Claim 5,
wherein the first determination device (110, 120, 130) comprises a receiver (110) of the simultaneous broadcasting network.

7. Apparatus according to either of Claims 5 and 6, wherein the provision device (150) comprises an interface (140) to a navigation system (150) comprising a topographical database (180).

8. System (100) for determining a probability of reception at a predetermined reception location in a simultaneous broadcasting network, comprising an apparatus according to one of Claims 5-7 and a navigation system (150) comprising a topographical database (180).

## Revendications

1. Procédé destiné à adapter prévisionnellement une stratégie de réception dans un réseau à fréquence commune, comprenant les étapes suivantes :
- de la détermination d'une trajectoire (210) prévisionnelle d'un récepteur (110) du réseau à fréquence commune ;
- de la sélection d'au moins un lieu de réception sur la trajectoire (210) ;
- de la détermination de sites et de paramètres d'émission pour au moins un émetteur (S1, S2, S3) du réseau à fréquence commune ;
- de la mise à disposition d'informations topographiques d'un territoire comprenant le lieu de réception et le site d'au moins l'un des émetteurs (S1, S2, S3) ;
- de la détermination de la probabilité de réception au lieu de réception sur la base de propagations topographiquement conditionnées de signaux entre les sites des émetteurs et le lieu de réception ;
- de l'activation du récepteur (110) en fonction de la probabilité de réception déterminée.

2. Procédé selon la revendication 1, les paramètres d'émission comprenant au moins une caractéristique de propagation dépendant d'une puissance d'émission et d'une direction.

3. Procédé selon la revendication 1 ou 2, la détermination de la trajectoire (210) prévue comprenant l'étape de la détermination d'un état de déplacement du récepteur (110).

4. Procédé selon l'une quelconque des revendications précédentes, comprenant par ailleurs l'étape de la détermination des paramètres d'émission et/ou du site d'au moins un émetteur (S1, S2, S3) sur la base d'un signal transmis à l'aide du réseau à fréquence commune.

5. Dispositif pour l'adaptation prévisionnelle d'une stratégie de réception dans un réseau à fréquence commune, comprenant :
- un système de navigation (170) pour déterminer une trajectoire (210) prévisionnelle du récepteur (110) et pour déterminer un lieu de réception ;
- un système de sélection d'au moins un lieu de réception sur la trajectoire (210) ;
- un premier système de détermination (110, 120, 130) pour déterminer des sites et des paramètres d'émission pour au moins un émetteur (S1, S2, S3) du réseau à fréquence commune ;
- un système de mise à disposition (150) pour des informations topographiques d'un territoire comprenant le lieu de réception et le site d'au moins l'un des émetteurs (S1, S2, S3) ; et
- un deuxième système de détermination (130) pour déterminer la probabilité de réception au lieu de réception sur la base de propagations topographiquement conditionnées de signaux entre les sites des émetteurs et le lieu de réception,
- le récepteur (110) étant aménagé pour être activé en fonction de la probabilité de réception déterminée.

6. Dispositif selon la revendication 5, le premier système de détermination (110, 120, 130) comprenant un récepteur (110) du réseau à fréquence commune.

7. Dispositif selon l'une quelconque des revendications 5 ou 6, le système de mise à disposition (150) comprenant une interface (140) vers un système de navigation (150) comprenant une base de données (180) topographique.

8. Système (100) de détermination d'une probabilité de réception en un lieu de réception prédéterminé dans un réseau à fréquence commune, comprenant un dispositif selon l'une quelconque des revendications 5 - 7 et un système de navigation (150) comprenant une base de données (180) topographique.
